**Europäisches Patentamt**

**European Patent Office**

**Office européen des brevets**

(19)

(11) Veröffentlichungsnummer : **0 204 756**
**B1**

(12)

# EUROPÄISCHE PATENTSCHRIFT

(45) Veröffentlichungstag der Patentschrift :
28.03.90

(21) Anmeldenummer : 85906054.3

(22) Anmeldetag : 12.11.85

(86) Internationale Anmeldenummer :
PCT/EP 85/00613

(87) Internationale Veröffentlichungsnummer :
WO/86030 (22.05.86 Gazettee 86/11)

(51) Int. Cl.⁵ : $G\ 03\ B\ 23/02$

(54) VORRICHTUNG ZUM ZYKLISCHEN UMSCHICHTEN EINES STAPELS RECHTECKIGER ODER QUADRATISCHER BLÄTTER.

(30) Priorität : 13.11.84 DE 3441454

(43) Veröffentlichungstag der Anmeldung :
17.12.86 Patentblatt 86/51

(45) Bekanntmachung des Hinweises auf die Patenter-
teilung : 28.03.90 Patentblatt 90/13

(84) Benannte Vertragsstaaten :
AT BE CH DE FR GB IT LI NL SE

(56) Entgegenhaltungen :
DE--A-- 3 014 394
DE--A-- 3 342 238
FR--A-- 2 403 207

(73) Patentinhaber : Licinvest AG
Hartbertstrasse 9
CH-7002 Chur (CH)

(72) Erfinder : ACKERET, Peter
Allmendstrasse 18
CH-8700 Küsnacht (CH)

(74) Vertreter : Röhl, Wolf Horst, Dipl.-Phys., Dr. et al
Dipl.-Ing. K. Sparing Dipl.-Phys. Dr. W.H. Röhl Rethels-
trasse 123
D-4000 Düsseldorf 1 (DE)

## Beschreibung

Die Erfindung betrifft eine Vorrichtung zum zyklischen Umschichten eines Stapels rechteckiger oder quadratischer Blätter oder einen sogenannten « Bildwechsler ».

Bildwechsler sind aus den US-Patentschriften 4.238.898, 4 238 899 4.241.528, 4.241.529, 4.245.417, 4.259.802 und 4.376.348 und der DE-A-3342238 bekannt. Ihnen allen liegt das Prinzip zugrunde, daß ein Stapel von Bildern, wobei insbesondere an Fotoabzüge zu denken ist, von zwei relativ zueinander verschieblichen Rahmenteilen aufgenommen ist, von denen eines ein Betrachtungsfenster aufweisen kann. Jeweils bei einem vollständigen Bewegungszyklus der Rahmenteile — das heißt vollständig auseinanderziehen und wieder vollständig zusammenschieben — wird ein Bild an einem Stapelende abgenommen und am anderen Stapelende wieder zugefügt. Hierfür weisen die Bildwechsler die folgenden Komponenten auf :

Eine Trenneinrichtung löst ein Einzelbild vom Stapel ; eine Zufuhreinrichtung führt der Trenneinrichtung Bilder zu ;

eine Halteeinrichtung hält das vom Stapel abgetrennte Einzelbild in einem der Rahmenteile, während der Reststapel im anderen Rahmenteil gehalten wird ;

eine Leiteinrichtung führt das abgetrennte Einzelbild so, daß es auf die andere Seite des Reststapels gelangt.

Bei den bekannten Bildwechslern ist als Zufuhreinrichtung ein flächig an dem abzutrennenden Blatt angreifender Haftbelag vorgesehen.

Bei älteren druckschriftlich bekanntgewordenen Blattwechslern wird ein haken- oder leistenartiger Mitnehmer verwendet, der an der der Trenneinrichtung abgewandten Kante des Stapels angreift, wobei eine Andruckanordnung den Eingriff sichern soll. Diese ältere Bauart mag für steife Karten brauchbar sein, insbesondere dann, wenn die Anzahl der den Stapel bildenden Karten nur in engen Grenzen variiert zu werden braucht.

Es ist die Aufgabe der vorliegenden Erfindung, einen für Fotoabzüge brauchbaren Wechsler dieser Gattung zu schaffen.

Bei Fotoabzügen liegen Bedingungen vor, die die bekannten Wechsler versagen lassen. Die Fotoabzüge sind sehr dünn mit etwa 0,25 mm Dicke, bestehen aus einem Papier-Kunststoff-Laminat und neigen daher sowohl dazu, sich in trockener Umgebung statisch aufzuladen, als auch in feuchter Umgebung klebrig zu werden, so daß in beiden Fällen erstaunlich große Scherkräft erforderlich sein können, um zwei Stapel aufeinanderliegende Fotos zu trennen. Aufgrund des geschilderten Laminataufbaus verziehen und wölben sich die Fotos außerdem in Abhängigkeit von Temperatur und Umgebungsfeuchte.

Wollte man die bekannten Vorrichtungen unverändert für Fotoabzüge einsetzen, so würde das Wechselsystem versagen : Der Mitnehmer in Form von Haken oder Leisten würde das zu vereinzelnde Blatt nicht sicher festhalten können und irgendwo auf der Förderstrecke abrutschen. Eine Erhöhung des Drucks der Andruckanordnung würde zwar möglicherweise die Verhältnisse etwas günstiger für das Abziehen des Blattes vom Stapel machen, doch würde man sich dafür vermehrte Schwierigkeiten beim Wiederzufügen des Blattes zum Stapel einhandeln.

Gemäß der Erfindung wird diese Aufgabe durch die im kennzeichnenden Teil des Patentanspruchs 1 genannten Merkmale gelöst.

Demgemäß ist zunächst vorgesehen, daß die Andruckanordnung stets das abzutrennende Blatt im Eingriff mit dem Mitnehmer hält, und zwar genau an der Stelle, wo der Mitnehmer angreift. Dieser kann so das Blatt sicher der Trenneinrichtung zuführen und es auch noch bis in eine Position transportieren, wo es vom Stapel freigekommen ist. In dieser Position der beiden Rahmenteile steht nun die Andruckanordnung unmittelbar im Bereich der Trenneinrichtung (da der Mitnehmer auch dort ist), und beim Rückhub der Rahmenteile muß jetzt das Einzelbild zwischen die Andruckanordnung und den Stapel eingeführt werden. Dies ist aus geometrischen Gründen aber nicht möglich, ohne das Einzelblatt zu beschädigen, wenn man nicht zusätzlich die Abhängigkeit von der Relativbewegung der Rahmenteile vorzugsweise auf die Andruckanordnung einwirkend den Einschub zumindest der führenden Kante des Einzelblattes erleichtert.

Das erfindungsgemäße Konzept wird nachstehend unter Bezugnahme auf die beigefügten Zeichnungen im einzelnen erläutert.

Fig. 1 soll die Problematik illustrieren, die zu lösen ist,

Fig. 2 bis 6 stellen die erfindungsgemäße Vorrichtung im weitgehend schematisierten Längsschnitt in aufeinanderfolgenden Phasen eines Wechselzyklus dar,

Fig. 7 ist ein Querschnitt durch die Vorrichtung, und

Fig. 8 zeigt eine der Druckfedern im Grundriß.

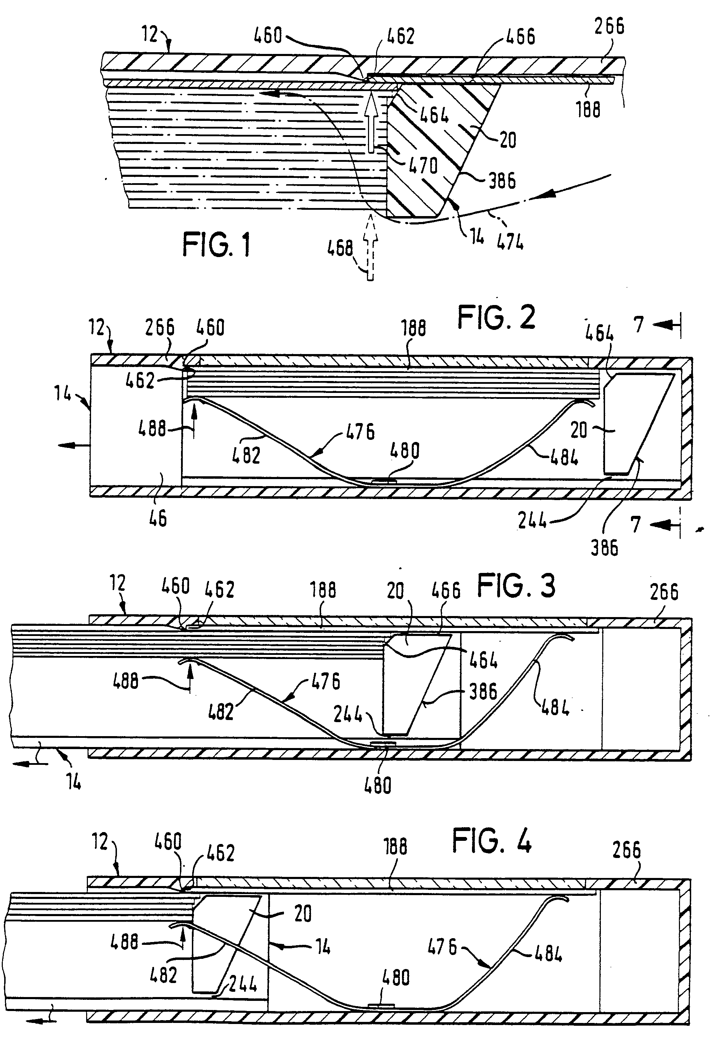

Fig. 1 zeigt das Zusammenwirken eines als Zufuhrorgan dienenden Mitnehmers 460 in Form eines Hakens oder einer Leiste, der hinter die in Förderrichtung hintere Kante 462 eines abzutrennenden Blattes greift. Die Trenneinrichtung umfaßt einen Separator 20 mit einer Einlaufschräge 464. Zwischen der Oberseite 466 des Separators und der Deckwand 266 eines Rahmenteils wird das Blatt 188 durchgeschoben. Damit der Eingriff zwischen Blatt und Mitnehmer sichergestellt ist, wirkt im Bereich unmittelbar vor (gesehen in Förderrichtung) dem Separator eine Andruckanordnung, die hier durch Pfeile symbolisiert ist, welche die Wirkrichtung der Anordnung zeigen. Je nach der Anzahl der Blatter im Stapel steht die Andruckanordnung weit unterhalb des von den Teilen 466, 266 begrenzten Durchlasses (unterbrochener Pfeil 468) oder, wenn nur wenige Blätter im Stapel sind, ziemlich dicht unter dem Mitnehmer (dicker Pfeil 470). Wenn das abgetrennte Blatt von dem Mitnehmer bis hinter die Rückseite des Separatorsteges geführt worden ist, kommt seine rückwärtige Querkante 472 frei und fällt entgegen der Wirkrichtung der Andruckanordnung nach unten oder wird von nicht dargestellten Hilfsmitteln dorthin verlagert, damit diese Kante wieder zwischen die Andruckanordnung und den Stapel eingeführt werden kann. Man erkennt, daß dies in der dargestellten Situation äußerst kompliziert sein dürfte, da diese Kante einen Weg etwa entlang der gestrichelten Bahn 474 zurücklegen müßte unter erheblicher Deformation des Blattes.

Fig. 2 bis 8 zeigen, wie dieses Problem gelöst wird.

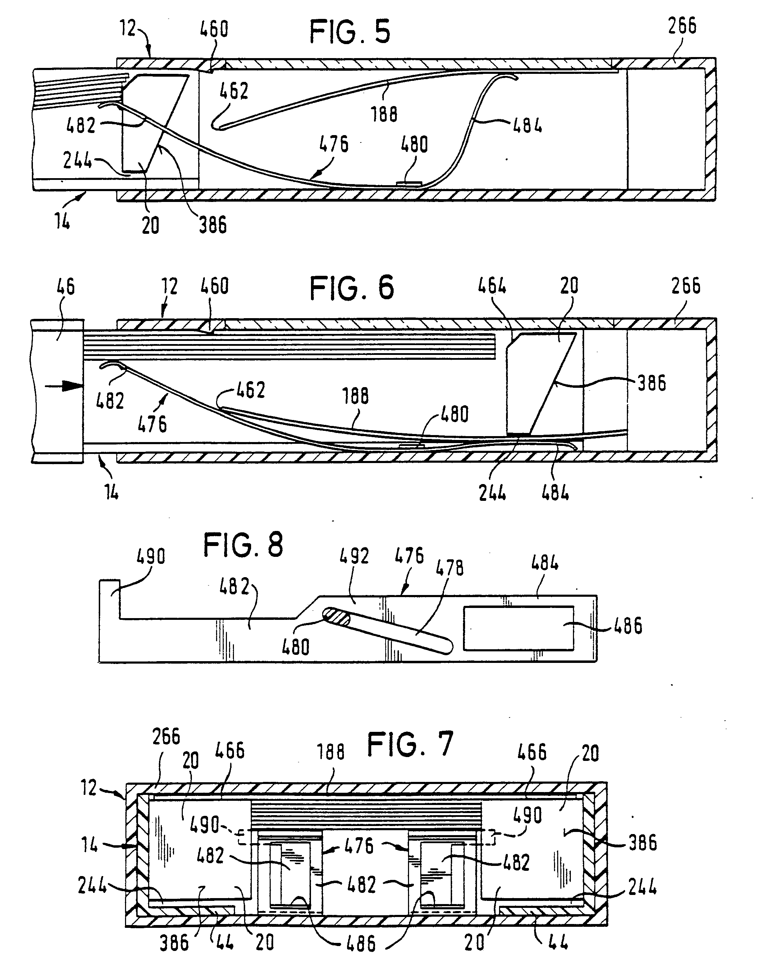

Das eine Rahmenteil hat die Form eines Gehäuses 12, das andere Rahmenteil ist ein Schieber 14, der relativ zum Gehäuse einen vorgegebenen Auszugshub durchlaufen kann ; der voll ausgezogene Zustand ist in Fig. 4 gezeigt. Der Mitnehmer 460 ist an die Gehäusedeckwand 266 angeformt. Die Andruckanordnung umfaßt zwei zueinander parallele doppelarmige Blattfedern 476. Diese Federn haben eine Konfiguration gemäß Fig. 8 : Ein schrägstehendes Langloch 478 sitzt auf einem länglichen Führungsstück 480, das am Gehäuseboden angeformt ist. Der fast genau unter dem Mitnehmer sich an den Stapel von unten anliegende Federarm 482 ist so kräftig ausgebildet, daß der Stapel auch bei vielen Blättern sicher an dem Mitnehmer in Anlage gehalten wird. Der andere Federarm 484 ist durch eine Ausnehmung 486 geschwächt und daher wesentlich weicher, da in der Ausgangsstellung nach Fig. 1 das zu wechselnde Blatt durch die Schräge 464 in den Durchlaß geleitet wird, auch wenn der Andruck nur gering ist.

Man erkennt in Fig. 7, daß der Separator 20 sich nicht über die gesamte Breite des Schiebers 14 erstreckt, an dessen Holme 44 er angeformt ist, sondern in der Mitte ausgenommen wurde, so daß beim Herausziehen des Schiebers 14 aus dem Gehäuse 12 die Federn der Andruckanordnung zwischen den beiden Separatorstegteilen hindurchlaufen können.

Von Beginn der Rahmenteilbewegung (Fig. 2) bis fas zu dem Vollauszug (Fig. 5) bleibt der Andruck, symbolisiert durch Pfeil 488, genau unter dem Mitnehmer erhalten. In der Position nach Fig. 4 laufen die Separatorstegteile 20 auf je einen auswärts gekehrten Finger 490 auf, und auf dem Weg des Schiebers aus der Position nach Fig. 4 in die nach Fig. 5 werden die beiden Blattfedern 476 längs des Führungsstücks 480 gleitend mitgenommen. Die Federn werden wegen der Schrägstellung des Langlochs 478 in Richtung der Schieberbewegung, aber auch etwas nach außen verlagert, bleiben aber im wesentlichen parallel zur Bewegungsrichtung.

Durch diese Verlagerung in Bewegungsrichtung ergibt sich auf der den Separatorstegteilen abgewandten Seite des Gehäuses in Fig. 5, daß das abgetrennte Blatt 188 von den Federarmen 484 nach oben an die Gehäusedeckwand 266 gepreßt wird, während seine Kante 462 freikommt und nach unten durchhängt oder von Hilfsmitteln abwärts gedrückt wird.

Wird nun, ausgehend von Fig. 4, der Schieber 14 wieder eingeschoben, so gelangt diese Kante 462 längs der Schrägfläche 386 der Separatorstegteile nach unten bis vor den Durchtritt 244 in diesen hinein, während der Federarm 482 mit seinem freien Ende längs des untersten Blattes des Stapels gleitet, jedoch immer mit einem Vorlauf vor der Kante 462 von Blatt 188 entsprechend der Verlagerung des Langlochsystems.

Die zweite Folge dieser Verlagerung, nämlich in Richtung nach außen, ist, daß die Separatorstegteile 20 auf die seitlich ausladenden Kufenabschnitte der Federarme 484 auflaufen und diese, da sie relativ weich sind, ohne Behinderung der Rahmenteilbewegung nach unten drücken, so daß auch die hintere Kante des wieder unter die Andruckanordnung zu führenden Blattes freikommt.

Kurz vor Erreichen der Ausgangsposition läuft irgendein Teil des Schiebers 14, z. B. das Griffstück 46, auf die Federarme 482 bzw. die Finger 490 auf und drückt die Blattfedern wieder entsprechend dem Langlochsystem in die Ausgangsposition zurück. Dabei gleitet das Ende des Federarmes 482 sanft unter die Kante 462 des nunmehr dem Stapel unten wieder zugeführten Blattes.

## Patentansprüche

1. Vorrichtung zum zyklischen Umschichten eines Stapels rechteckiger Blätter, insbesondere eines Stapels von Fotoabzügen, mit einem ersten (12) und einem zweiten (14) Rahmenteil, die relativ zueinander und parallel zur Stapelhauptebene bewegbar sind, und mit Mitteln, die bei einer Auszugs- und Einschubbewegung der Rahmenteile ein Einzelblatt an einer Stapelseite abnehmen und an der andern Stapelseite wieder zufügen, welche Mittel umfassen :

(a) eine Trenneinrichtung (20/226) zum Abtrennen des Einzelblattes (188) vom Stapel,

(b) eine Zufuhreinrichtung (460) zum Zuführen von Blättern zu der Trenneinrichtung,

(c) eine erste Halteeinrichtung (460) zum Halten des Einzelblattes in dem ersten Rahmenteil (12) und eine zweite Halteeinrichtung (20) zum Halten des Reststapels in dem andern Rahmenteil (14), und

(d) eine Leiteinrichtung (386) zum Führen des abgetrennten Einzelblattes zwecks Rückführung auf die andere Seite des Reststapels, dadurch gekennzeichnet, daß die erste Halteeinrichtung von einem an der in Förderrichtung hinteren Kante des zu vereinzelnden Blattes angreifenden Mitnehmer (460) gebildet ist und dass auf der dem Mitnehmer abgewandten Seite des Stapels eine Andruckanordnung (476) vorgesehen ist, die das abzutrennende Blatt über mindestens einen vorbestimmten Teilhub der Auszugsbewegung in Eingriff mit dem Mitnehmer hält (488 in Fig. 2-4), jedoch — von der Rahmenteilbewegung gesteuert

— auf demselben Teilhub der Einschubbewegung inaktiviert ist und dadurch einen Durchlaß zum Rückführen des Einzelblattes auf die andere Seite des Reststapels freigibt.

2. Vorrichtung nach Anspruch 1, dadurch gekennzeichnet, daß der Teilhub den Auszugsweg bis kurz vor einem Umkehrpunkt der Bewegungsrichtung umfaßt.

3. Vorrichtung nach Anspruch 1 oder 2, dadurch gekennzeichnet, daß die zweite Halteeinrichtung einen Separatorsteg (20) umfaßt, der einen Abzugsspalt für das Einzelblatt (188) begrenzt.

4. Vorrichtung nach Anspruch 3, dadurch gekennzeichnet, daß die Andruckanordnung (476) im Bereich des Abzugsspalts wirksam ist.

5. Vorrichtung nach einem der Ansprüche 1-4, dadurch gekennzeichnet, daß die Andruckanordnung (476) relativ zu dem sie tragenden Rahmenteil (12) zwischen einer aktiven Andruckposition und einer inaktiven Freigabeposition verlagerbar ist.

6. Vorrichtung nach Anspruch 5, dadurch gekennzeichnet, daß die Andruckanordnung in einer Richtung verlagerbar ist, die zumindest eine Komponente in Richtung der Rahmenteilbewegung umfaßt.

7. Vorrichtung nach einem der vorangehenden Ansprüche, dadurch gekennzeichnet, daß die Andruckanordnung mindestens eine Druckfeder (476) umfaßt, die in demselben Rahmenteil (12) wie der Mitnehmer (460) angeordnet ist.

8. Vorrichtung nach Anspruch 6 und 7, dadurch gekennzeichnet, daß die Druckfeder (476) in Abhängigkeit von der Relativlage der Rahmenteile (12, 14) verlagerbar ist.

9. Vorrichtung nach Anspruch 8, dadurch gekennzeichnet, daß die Druckfeder (476) auf dem Teilhub der Einschubbewegung längs des Stapels, jedoch vor der Führungskante des zwischen ihr und dem Stapel einzuführenden Blattes läuft.

10. Vorrichtung nach einem der Ansprüche 7-9, dadurch gekennzeichnet, daß die mindestens eine Druckfeder (476) einen ersten Federarm (482) gegenüber dem Mitnehmer (460) und einen zweiten Federarm (484) umfaßt, und daß beide Federarme bei zusammengeschobenen Rahmenteilen (12, 14) den Stapel gegen eine gegenüberliegende Wandung eines der Rahmenteile (12) drücken.

11. Vorrichtung nach Anspruch 10, dadurch gekennzeichnet, daß auch der zweite Federarm (484) zumindest während des Einschub-Teilhubs außer Eingriff mit dem Stapel gehalten ist.

12. Vorrichtung nach Anspruch 11, dadurch gekennzeichnet, daß der zweite Federarm (484) durch Auflaufen eines Elementes (20) des andern Rahmenteils (14) vom Stapel wegdrückbar ist.

13. Vorrichtung nach einem der Ansprüche 8 oder 9, dadurch gekennzeichnet, daß die mindestens eine Druckfeder (476) bei jedem Wechselzyklus jeweils nahe den Umkehrpunkten der Bewegungsrichtung der Rahmenteile (12, 14) aus der einen in die andere Position verlagert wird.

14. Vorrichtung nach einem der vorangehenden Ansprüche, dadurch gekennzeichnet, daß der Mitnehmer (460) auch ein Element der Zufuhreinrichtung bildet.

15. Vorrichtung nach einem der Ansprüche 7-13, dadurch gekennzeichnet, daß ein Paar von spiegelsymmetrisch angeordneten Druckfedern vorgesehen ist.

16. Vorrichtung nach einem der Ansprüche 10-12, dadurch gekennzeichnet, daß der zweite Federarm (484) ein Element der Leiteinrichtung bildet.

17. Vorrichtung nach einem der vorangehenden Ansprüche, dadurch gekennzeichnet, daß das erste Rahmenteil ein Sichtfenster für das Exponieren des dem Sichtfenster zugekehrt liegenden Blattes aufweist.

18. Vorrichtung nach Anspruch 17, dadurch gekennzeichnet, daß der Mitnehmer (460) an dem fensterseitigen Blatt angreifend angeordnet ist.

19. Vorrichtung nach einem der vorangehenden Ansprüche, dadurch gekennzeichnet, daß die Andruckanordnung (476) im ersten Rahmenteil (12) angeordnet ist.

20. Vorrichtung nach einem der vorangehenden Ansprüche, dadurch gekennzeichnet, daß die Andruckanordnung (476) bei zusammengeschobenen Rahmenteilen den Stapel gegen eine Wandung, vorzugsweise eine mit einem Sichtfenster versehene Wandung, eines der Rahmenteile anpreßt.

21. Vorrichtung nach einem der vorangehenden Ansprüche, dadurch gekennzeichnet, daß der Mitnehmer (460) an das erste Rahmenteil angeformt ist.

22. Vorrichtung nach einem der vorangehenden Ansprüche, dadurch gekennzeichnet, daß der Mitnehmer hakenartig ausgebildet ist.

23. Vorrichtung nach einem der vorangehenden Ansprüche, dadurch gekennzeichnet, daß die zweite Halteeinrichtung zwei Separatorsteg-Abschnitte (20) umfaßt, die voneinander durch eine offene Passage getrennt sind.

24. Vorrichtung nach Anspruch 23, dadurch gekennzeichnet, daß die Passage von der Andruckanordnung beim Auseinanderbewegen der Rahmenteile durchlaufen wird.

25. Vorrichtung nach Anspruch 23 oder 24, dadurch gekennzeichnet, daß das zweite Rahmenteil (14) sich in Bewegungsrichtung der Rahmenteile erstreckende Holme (44) umfaßt, an die die Separatorsteg-Abschnitte angeformt sind.

26. Vorrichtung nach einem der vorangehenden Ansprüche, dadurch gekennzeichnet, daß die zweite Halteeinrichtung (20) zugleich Teil einer Inaktivierungseinrichtung für die Andruckanordnung ist.

**Claims**

1. Device for the cyclic rearrangement of a pile of rectangular sheets, especially a pile of photographic prints, with a first (12) and a second (14) frame part which are movable relative to one another and parallel to the principal plane of the pile, and with means which on a withdrawal and an insertion movement of the frame parts remove an individual sheet from one end of the pile and add it to the other end of the pile again, which means comprise :

(a) a separating means (20/226) for separating the individual sheet (188) from the pile,

(b) a feeding means (460) for feeding sheets to the separating means,

(c) a first retaining means (460) for holding the individual sheet in the first frame part (12) and a second retaining means (20) for holding the remainder of the pile in the other frame part (14), and

(d) a guide means (386) for guiding the separated individual sheet for the purpose of returning it to the other end of the remainder of the pile, characterised in that the first retaining means is formed by a transporter (460) engaging the rear edge (seen in the transport direction) of the sheet to be separated and that there is provided on the side of the pile remote from the transporter a pressure arrangement (476) which, over at least a predetermined part of the withdrawal movement stroke, holds the sheet to be separated in engagement with the transporter (488 in Fig. 2-4), but, controlled by the movement of the frame parts, is inactivated over the same part of the insertion movement stroke and as a result leaves a gap for the return of the individual sheet to the other end of the remainder of the pile.

2. Device according to claim 1, characterised in that the part of the stroke comprises the withdrawal path as far as shortly before a point of reversal of the direction of movement.

3. Device according to claim 1 or 2, characterised in that the second retaining means comprises a separator bar (20) which defines a gap for removal of the individual sheet (188).

4. Device according to claim 3, characterised in that the pressure arrangement (476) is effective in the region of the gap for removal.

5. Device according to any one of claims 1 to 4, characterised in that the pressure arrangement (476) is displaceable, relative to the frame part (12) that carries it, between an active pressing position and an inactive release position.

6. Device according to claim 5, characterised in that the pressure arrangement is displaceable in a direction that includes at least one component in the direction of movement of the frame part.

7. Device according to any one of the preceding claims, characterised in that the pressure arrangement comprises at least one pressure spring (476) which is arranged in the same frame part (12) as the transporter (460).

8. Device according to claims 6 and 7, characterised in that the pressure spring (476) is displaceable as a function of the relative position of the frame parts (12, 14).

9. Device according to claim 8, characterised in that the pressure spring (476) runs for the part of the insertion movement stroke along the pile, but in front of the leading edge of the sheet to be introduced between it and the pile.

10. Device according to any one of claims 7 to 9, characterised in that the at least one pressure spring (476) comprises a first spring arm (482) opposite the transporter (460) and a second spring arm (484), and that when the frame parts (12, 14) are pushed together the two spring arms press the pile against an opposite wall of one of the frame parts (12).

11. Device according to claim 10, characterised in that the second spring arm (484) is also held out of engagement with the pile at least during the part of the insertion stroke.

12. Device according to claim 11, characterised in that the second spring arm (484) can be pushed away from the pile by the running-on of an element (20) of the other frame part (14).

13. Device according to claim 8 or 9, characterised in that the at least one pressure spring (476) is displaced in each change-about cycle close to the respective points of reversal of the direction of movement of the frame parts (12, 14) from one position to the other.

14. Device according to any one of the preceding claims, characterised in that the transporter (460) also forms an element of the feeding means.

15. Device according to any one of claims 7 to 13, characterised in that a pair of mirror-symmetrically arranged pressure springs is provided.

16. Device according to any one of claims 10 to 12, characterised in that the second spring arm (484) forms an element of the guide means.

17. Device according to any one of the preceding claims, characterised in that the first frame part has a viewing window for exposing the sheet lying facing the viewing window.

18. Device according to claim 17, characterised in that the transporter (460) is arranged in such a manner that it acts on the sheet on the window side.

19. Device according to any one of the preceding claims, characterised in that the pressure arrangement (476) is arranged in the first frame part (12).

20. Device according to any one of the preceding claims, characterised in that when the frame parts are pushed together the pressure arrangement (476) presses the pile against a wall, preferably a wall provided with a viewing window, of one of the frame parts.

21. Device according to any one of the preceding claims, characterised in that the transporter (460) is integrally-formed on the first frame part.

22. Device according to any one of the preceding claims, characterised in that the transporter is in the form of a hook.

23. Device according to any one of the preceding claims, characterised in that the second retaining means comprises two separator-bar portions (20) that are separated from one another by an open passage.

24. Device according to claim 23, characterised in that the pressure arrangement passes through the passage when the frame parts are moved apart.

25. Device according to claim 23 or 24, characterised in that the second frame part (14) comprises struts (44), extending in the direction of movement of the frame parts, on which the separator-bar portions are integrally-formed.

26. Device according to any one of the preceding claims, characterised in that the second retaining means (20) is at the same time part of an inactivating means for the pressure arrangement.

## Revendications

1. Dispositif de reclassement cyclique d'une pile de feuilles rectangulaires, notamment une pile de clichés photographiques, comportant un premier élément en forme de cadre (12) et un second élément en forme de cadre (14), qui peuvent être déplacés l'un par rapport à l'autre et parallèlement au plan principal de la pile, et des moyens, qui, lors d'un déplacement d'extraction et d'emboîtement des éléments en forme de cadres, prélèvent une feuille individuelle sur une face de la pile et l'envoient alors sur l'autre face de la pile, lesquels moyens comprennent :

(a) un dispositif de séparation (20/226) servant à séparer la feuille individuelle (188) de la pile,

(b) un dispositif d'amenée (460) servant à amener des feuilles au dispositif de séparation,

(c) un premier dispositif de retenue (460) servant à retenir la feuille individuelle dans le premier élément en forme de cadre (12) et un second dispositif de retenue (20) servant à retenir la pile restante dans l'autre élément en forme de cadre (14), et

(d) un dispositif de guidage (386) servant à guider la feuille individuelle séparée en vue de la ramener sur l'autre face de la pile restante, caractérisé en ce que le premier dispositif de retenue est constitué par un organe d'entraînement (460) s'engageant contre le bord arrière, dans la Direction de déplacement, de la feuille devant être séparée, et que sur la face de la pile, tournée à l'opposé de l'organe d'entraînement, il est prévu un dispositif de pression (476), qui maintient la feuille devant être séparée, en prise avec l'organe d'entraînement (488 sur les figures 2-4), sur au moins une course partielle prédéterminée du déplacement d'extraction, mais — sous la commande du déplacement de l'élément en forme de cadre — est inactivé sur la même course partielle du déplacement d'insertion et libère, de ce fait, un passage pour le renvoi de la feuille individuelle sur l'autre face de la pile restante.

2. Dispositif selon la revendication 1, caractérisé en ce que la course partielle du trajet d'extraction s'étend jusqu'à une faible distance en-deçà d'un point d'inversion du sens de déplacement.

3. Dispositif selon la revendication 1 ou 2, caractérisé en ce que le second dispositif de retenue comporte une barrette de séparation (20), qui limite une fente d'extraction pour la feuille individuelle (188).

4. Dispositif selon la revendication 3, caractérisé en ce que le dispositif de pression (476) agit au voisinage de la fente d'extraction.

5. Dispositif selon l'une des revendications 1-4, caractérisé en ce que le dispositif de pression (476) peut être déplacé, par rapport à l'élément en forme de cadre (12), qui le porte, entre une position active de pression et une position inactive de libération.

6. Dispositif selon la revendication 5, caractérisé en ce que le dispositif de pression est déplaçable dans une direction, qui inclut au moins une composante s'étendant dans la direction de déplacement de l'élément en forme de cadre.

7. Dispositif selon l'une des revendications précédentes, caractérisé en ce que le dispositif de pression comporte au moins un ressort de pression (476), qui est disposé dans le même élément en forme de cadre (12) que l'organe d'entraînement (460).

8. Dispositif selon l'une des revendications 6 et 7, caractérisé en ce que le ressort de pression (476) peut être déplacé en fonction de la position relative des éléments en forme de cadres (12, 14).

9. Dispositif selon la revendication 8, caractérisé en ce que le ressort de pression (476) se déplace sur la course partielle du mouvement d'insertion le long de la pile, mais devant le bord de guidage de la feuille devant être insérée entre ce ressort et la pile.

10. Dispositif selon l'une des revendications 7-9, caractérisé en ce qu'au moins un ressort de pression (476) comprend une première branche (482) située en vis-à-vis de l'organe d'entraînement (460) et une seconde branche (484) et que, lorsque les deux éléments en forme de cadres (12, 14) sont réunis à l'état inséré, les deux branches du ressort repoussent la pile contre une paroi opposée de l'un des éléments en forme de cadres (12).

11. Dispositif selon la revendication 10, caractérisé en ce que la seconde branche (484) du ressort est également maintenue dans un état dégagé de la pile, au moins pendant la course partielle d'insertion.

12. Dispositif selon la revendication 11, caractérisé en ce que la seconde branche (484) du ressort peut être écartée de la pile lorsqu'elle rencontre un élément (20) de l'autre élément en forme de cadre (14).

13. Dispositif selon l'une des revendications 8 ou 9, caractérisé en ce que lors de chaque cycle de changement, au moins un ressort de pression (476) et déplacé d'une position dans l'autre position, et ce respectivement à proximité des points d'inversion du sens de déplacement des éléments en forme de cadres (12, 14).

14. Dispositif selon l'une des revendications précédentes, caractérisé en ce que l'organe d'entraînement (460) constitue également un élément du dispositif d'amenée.

15. Dispositif selon l'une des revendications 7-13, caractérisé en ce qu'il est prévu un couple de ressorts de pression disposés symétriquement.

16. Dispositif selon l'une des revendications 10-12, caractérisé en ce que la seconde branche (484) du ressort constitue un élément du dispositif de guidage.

17. Dispositif selon l'une des revendications précédentes, caractérisé en ce que le premier élément en forme de cadre possède un voyant permettant d'exposer la feuille tournée vers ce voyant.

18. Dispositif selon la revendication 17, caractérisé en ce que l'organe d'entraînement (460) est disposé de manière à s'accrocher sur la feuille située du côté du voyant.

19. Dispositif selon l'une des revendications précédentes, caractérisé en ce que le dispositif de pression (476) est disposé dans le premier élément en forme de cadre (12).

20. Dispositif selon l'une des revendications précédentes, caractérisé en ce que, lorsque les éléments en forme de cadres sont rassemblés à l'état inséré, le dispositif de pression (476) repousse la pile contre une paroi, de préférence une paroi munie d'un voyant, de l'un des éléments en forme de cadres.

21. Dispositif selon l'une des revendications précédentes, caractérisé en ce que l'organe d'entraînement (460) est formé par façonnage sur le premier élément en forme de cadre.

22. Dispositif selon l'une des revendications précédentes, caractérisé en ce que l'organe d'entraînement est réalisé sous la forme d'un crochet.

23. Dispositif selon l'une des revendications précédentes, caractérisé en ce que le second dispositif de retenue comporte une barrette de séparation formée de deux sections (20), qui sont séparées l'une de l'autre par un passage ouvert.

24. Dispositif selon la revendication 23, caractérisé en ce que le passage est traversé par le dispositif de pression lors de l'écartement des éléments en forme de cadres.

25. Dispositif selon la revendication 23 ou 24, caractérisé en ce que le second élément en forme de cadre (14) comporte des longerons (44) qui s'étendent dans la direction de déplacement des éléments en forme de cadres et sur lesquels sont formées par façonnage les sections de la barrette de séparation.

26. Dispositif selon l'une des revendications précédentes, caractérisé en ce que le second dispositif de retenue (20) fait simultanément partie d'un dispositif de mise à l'état inactif du dispositif de pression.

FIG. 1

FIG. 2

FIG. 3

FIG. 4

# FIG. 5

# FIG. 6

# FIG. 8

# FIG. 7